# FASCICULE DE BREVET EUROPEEN

(11) **EP 2 819 614 B1**
(45) Date de publication et mention de la délivrance du brevet: **18.07.2018**
(21) Numéro de dépôt: 13712872.4
(22) Date de dépôt: 28.02.2013
(51) Int. Cl.: A61C 17/02, A61C 17/22

(54) **DISPOSITIF DE NETTOYAGE DENTAIRE**
VORRICHTUNG ZUM ZÄHNEPUTZEN
DEVICE FOR CLEANING TEETH

(30) Priorité: 01.03.2012 FR 1251879
(43) Date de publication de la demande: 07.01.2015
(73) Titulaire: Willo 32, 87280 Limoges (FR)
(72) Inventeur: DE GENTILE, Jean-Marie, 87220 Feytiat (FR)
(74) Mandataire: Cabinet Chaillot
(86) Numéro de dépôt international: PCT/FR2013/050434
(87) Numéro de publication internationale: WO 2013/128141

(56) Documents cités:
- DE-A1- 10 230 736
- US-A- 3 731 675
- US-A- 4 560 351
- US-A1- 2011 027 746

## Description

La présente invention concerne un dispositif et un procédé de nettoyage dentaire permettant le brossage simultané de la totalité des dents d'au moins une arcade.

Son protocole d'utilisation, très simple, le destine particulièrement aux personnes à mobilité réduite et, plus généralement, à toutes celles qui éprouvent des difficultés à nettoyer leurs dents avec les systèmes de brossage traditionnels.

Le nettoyage dentaire est classiquement effectué grâce à la brosse à dents. Pour être efficace, son maniement réclame un apprentissage et une habileté qui peuvent quelquefois faire défaut.

L'automatisation des mouvements de la tête de la brosse à dents électrique facilite son usage mais nécessite tout autant une bonne coordination et le respect d'un protocole strict. Le nettoyage n'est optimal que lorsqu'il concerne une arcade dentaire « standard », c'est-à-dire sans malposition et lorsque les tissus parodontaux sont sains. Cette situation idéale se rencontre rarement chez des personnes souffrant de handicap.

Il est alors nécessaire de recourir à des systèmes capables de compléter et parfaire l'hygiène bucco-dentaire: l'hydropulseur, le fil et la brossette inter-dentaire, les bains de bouches désinfectants. Leur utilisation est réservée aux sujets suffisamment adroits et requiert de longues minutes de patience.

Il existe également des situations particulières, telles que celles de militaires en déplacement ou en opération, pour lesquelles assurer l'hygiène buccale est difficile à l'aide d'une brosse à dents.

Le présent inventeur a cherché une solution palliant l'ensemble de ces inconvénients et, à cet effet, a mis au point un dispositif de nettoyage dentaire suivant lequel le nettoyage s'effectue par une contraction (que l'on peut également désigner comme étant une constriction) et un relâchement, suivant des cycles successifs, d'une coque ou gouttière en matériau élastique recevant et englobant la totalité des dents d'une arcade ou des deux arcades.

A la connaissance du déposant, aucun document de l'état antérieur de la technique qui décrit un nettoyage dentaire ou un traitement dentaire utilisant une gouttière ou analogue, tel que US 2010/0151407 A1, EP 1506746, WO 2005/94719 A1, US 7537451 B1, DE 10153245, WO 2010/02498 A1, n'a proposé d'effectuer un nettoyage dentaire par des mouvements successifs de relâchement et de contraction d'une gouttière souple autour des dents d'une arcade ou de deux arcades à nettoyer, ladite gouttière étant avantageusement tapissée intérieurement d'un revêtement apte à parfaire le décollement des salissures et de la plaque dentaire des dents et des espaces inter-dentaires, et les cycles de relâchement-contraction étant avantageusement provoqués par les opérations répétées conduites alternativement d'injection dans la gouttière d'un fluide, notamment d'un fluide neuf désinfectant, puis d'évacuation de ladite gouttière de ce fluide désinfectant usé.

La demande de brevet américain US - A - 4 560 351 décrit un dispositif de nettoyage dentaire selon l'état antérieur de la technique, permettant le nettoyage simultané des dents d'au moins une arcade.

Le document DE 102 30 736 Al décrit un dispositif de nettoyage dentaire en forme de gouttière combinant l'action d'un fluide et des brosses. Ainsi dans le cas d'utilisation d'un tel fluide désinfectant, la présente invention offre l'avantage complémentaire de permettre d'effectuer le nettoyage et la désinfection des dents et des espaces inter-dentaires aussi efficacement quelle que soit la configuration des arcades.

Par ailleurs, conformément à un mode de réalisation particulièrement intéressant, l'emploi pour assurer de tels cycles relâchement-contraction, d'un appareil exerçant des cycles de pression-dépression (générateur de cycles de pression-dépression) à l'intérieur de la gouttière permet d'automatiser toutes les opérations de nettoyage et ne nécessite aucune manipulation compliquée.

Ainsi, l'invention permet de réduire le temps consacré à l'hygiène buccale et au brossage à quelques secondes et augmente significativement son efficacité.

La présente invention a donc d'abord pour objet un dispositif de nettoyage dentaire permettant le nettoyage simultané des dents d'au moins une arcade, dispositif comprenant une gouttière en arc, simple ou double, apte à englober les dents respectivement d'une arcade ou des deux arcades à la fois et à s'adapter, par sa ou ses bordures libres, sur la ou les gencives correspondantes, ladite gouttière étant réalisée en un matériau souple acceptant une déformation réversible et compatible avec un usage médical, et caractérisé par le fait que le dispositif comprend des moyens d'injection/extraction de fluide pour injecter du fluide dans la gouttière et extraire ledit fluide de l'intérieur de la gouttière, lesdits moyens d'injection/extraction de fluide soumettant la gouttière, une fois celle-ci mise en place sur les dents pour leur nettoyage, à des cycles répétés d'injection/extraction de fluide provoquant des cycles de mise en pression/dépression de la gouttière pour un nettoyage des dents par action combinée, dans la gouttière, de circulation de fluide sur les dents et entre les dents et action mécanique de la surface interne de la gouttière sur les dents, résultant du relâchement, respectivement de la constriction, de la gouttière lors des cycles d'injection, respectivement d'extraction.

La forme générale d'une gouttière simple au repos est avantageusement telle qu'elle peut, pour un utilisateur donné, englober indifféremment les dents du maxillaire supérieur ou celles du maxillaire inférieur (mandibule). En effet, la correspondance de taille des arcades supérieure et inférieure liées par l'occlusion dentaire, fait que pour la très grande majorité des gens une seule et même gouttière, compte tenu de son élasticité, pourra s'adapter aux deux maxillaires.

Une gouttière simple présente donc en creux la forme d'une arcade dentaire qu'elle épouse en débordant largement sur la gencive de part et d'autre des dents.

Sur une coupe frontale passant par un secteur médian des mâchoires, le contour d'une gouttière simple débute latéralement au fond du sulcus gingivo-jugal, puis contourne la dent en laissant un espacement correspondant à l'épaisseur d'un revêtement interne ou à la hauteur de poils la tapissant intérieurement lorsqu'un tel revêtement ou des poils sont prévus comme décrit ci-après, et se termine, dans le cas du maxillaire supérieur, en contact avec la muqueuse palatine, et dans le cas de la mandibule, dans la zone de réflexion muqueuse gingivo-linguale.

La gouttière peut en effet avantageusement présenter, sur au moins une partie de sa surface interne, un état de surface non lisse ou un revêtement ou interface non lisse, lui permettant de favoriser la déstructuration de la plaque dentaire.

Ainsi, la gouttière peut présenter une surface interne partiellement ou totalement tapissée de reliefs, notamment des poils à la manière d'une brosse. En particulier, on peut prévoir que la surface interne de la gouttière soit tapissée de poils sur l'ensemble de la surface en regard avec les dents.

Les poils peuvent être de toute nature et sont destinés, lors des mouvements de contraction/relâchement de la gouttière, à déstructurer la plaque dentaire par frottement et écrasement.

D'autres solutions techniques sont envisageables pour parvenir au même résultat de déstructuration de la plaque dentaire. Il est ainsi possible de prévoir qu'une gouttière présente une interface souple (pouvant être dite dépressible), poreuse, du type mousse ou éponge, légèrement abrasive, présentant des propriétés mécaniques compatibles avec le nettoyage dentaire, interface qui est interposée entre la gouttière et les dents.

Ce qui vient d'être indiqué pour une gouttière simple vaut pour chaque gouttière d'une gouttière double.

Une gouttière selon l'invention est avantageusement fabriquée dans un matériau souple qui peut être choisi parmi les matériaux souples imperméables aux gaz (comme l'air) et aux liquides (eau, liquide nettoyant, liquide désinfectant), tels que le latex ou le silicone compatible avec un usage médical.

Les avancées techniques réalisées dans le domaine des silicones à usage alimentaire font que ce type de matériau reste le constituant idéal de la gouttière.

L'épaisseur de la gouttière est fonction de la souplesse du matériau employé. Elle doit pouvoir maintenir sa forme sans s'écraser sur elle-même. Une relative rigidité finale est nécessaire pour faciliter sa manipulation. Plus la consistance du silicone sera molle et plus il devra être épais.

Les tétines de biberons en silicone donnent un exemple de compromis idéal entre rigidité et souplesse assurant une tenue optimale de la forme tout en conservant les propriétés élastiques.

Comme dans le cas d'une tétine de biberon, une répartition non homogène du matériau élastique, dessinant des zones plus ou moins épaisses, pourra faire office d'armature.

La gouttière étant destinée à subir une dépression visant à la plaquer contre les dents comme cela sera décrit ci-après, elle doit avantageusement disposer sur l'intégralité de son bord libre d'un joint périphérique capable de contenir dans les meilleures conditions possibles les fuites d'air consécutives à l'aspiration.

En d'autres termes, de préférence, la gouttière s'adapte de manière étanche ou sensiblement étanche par sa ou ses bordures libres sur la ou les gencives correspondantes.

Par « sensiblement étanche », on entend qu'un peu de fluide (air, liquide, salive) peut être autorisé à pénétrer dans la gouttière en place sur la ou les gencives pour autant que la mise en contraction/relâchement de la gouttière de façon répétée puisse se faire de manière correcte. Il a cependant été constaté que, lors du fonctionnement, les joues et les lèvres, en venant en appui sur la gouttière, viennent parfaire le joint de celle-ci sur la ou les gencives.

L'adaptation périphérique de la gouttière sur la gencive peut être obtenue par différentes solutions techniques comme un bord en « soufflet » ou un bord plus épais réalisé avec un silicone de moindre dureté. La raison d'être de ce bord différencié étant d'obtenir le meilleur placage possible quelle que soit la configuration anatomique des arcades dentaires et de leur environnement muqueux, il doit être conçu suffisamment déformable et plastique pour pouvoir épouser étroitement les reliefs de l'intérieur de la bouche. De plus, étant de moindre dureté, il permet d'éviter de léser les gencives.

C'est ainsi que la ou les bordures libres de la gouttière respectivement simple ou double peuvent notamment être épaissies en forme de bourrelet. Ce bourrelet peut, comme indiqué, être de moindre dureté que le reste de la gouttière.

Dans le cas d'un dispositif comportant une gouttière double, ladite gouttière double peut être constituée par deux gouttières simples accolées par leur fond avec ou sans ouverture(s) de communication entre les deux.

En d'autres termes, la gouttière peut se concevoir de manière à englober simultanément les deux arcades dentaires, supérieure et inférieure. Dans ce cas, les deux gouttières composant cette gouttière double sont solidarisées entre elles. Cette jonction peut se faire soit hermétiquement, auquel cas les deux gouttières ne communiquent pas entre elles et il n'y a pas d'échange de fluides de l'une vers l'autre, soit de façon perméable, de par la présence de la ou des ouvertures précitées, de sorte qu'il y ait transmission de l'une à l'autre des fluides ainsi que des cycles de pression-dépression d'un générateur de pression-dépression tel qu'il sera décrit dans ce qui suit.

Dans le premier cas, chaque gouttière composant la gouttière double étant indépendante de l'autre, la transmission des pressions et des dépressions se fera par l'intermédiaire de deux couples indépendants de conduits de transmission, l'un des conduits servant à l'injection d'un fluide dans la gouttière et l'autre, son extraction.

Dans le deuxième cas, un seul couple de conduits de transmission permettra cette injection et cette extraction. Ces conduits de transmission sont décrits plus en détail ci-après.

Une gouttière selon l'invention peut être fabriquée par moulage de matériau souple (tel que le silicone), avec les reliefs (poils) moulés d'un seul tenant avec la gouttière ou intégrés lors de la prise du moulage sous la forme d'un tissu ou d'une toile présentant des poils de Nylon par exemple.

Dans le cas d'un bourrelet présenté en bordure de gouttière de moindre dureté que le reste de la gouttière, ce bourrelet pourra être formé en étant injecté à part dans le moule ou être moulé à part puis collé au reste de la gouttière lors de la prise finale, les deux parties étant collantes à ce moment.

Par ailleurs, une gouttière selon l'invention peut avantageusement porter un organe de préhension pour constituer un manche facilitant son introduction dans la bouche.

Il est en effet possible d'adjoindre à une gouttière selon l'invention un système de préhension en forme de manche de façon qu'elle puisse être plus facilement introduite dans la bouche et maintenue lors de son fonctionnement plaquée contre les muqueuses favorisant ainsi l'herméticité périphérique. La gouttière est alors avantageusement soutenue par une structure rigide prolongée dans sa partie antérieure par un manche.

La gouttière peut aussi être insérée dans un réceptacle rigide apte à être introduit dans la bouche, ledit réceptacle pouvant comporter un organe de préhension pour constituer un manche facilitant son introduction dans la bouche.

Le dispositif selon l'invention peut aussi comporter un plan de morsure ou d'occlusion situé en regard de la partie triturante des dents antagonistes pour permettre son maintien en bouche par fermeture des mâchoires, ledit plan de morsure ou d'occlusion étant porté par la gouttière ou par un organe de préhension porté par la gouttière ou par un réceptacle rigide dans lequel est insérée la gouttière.

Les sujets en capacité de le faire peuvent avec un tel plan de morsure ou d'occlusion maintenir leur gouttière en resserrant les mâchoires dessus.

Conformément à un premier mode de réalisation de la présente invention, les moyens d'injection/extraction de fluide consistent en au moins un orifice pratiqué dans ladite gouttière permettant l'aspiration par le porteur lui-même de l'air et/ou de la salive qu'elle contient en vue de sa contraction, puis, lorsque le porteur cesse d'aspirer, la restitution de l'air et/ou de la salive dans ladite gouttière en vue du relâchement de celle-ci.

La gouttière peut comprendre au moins un orifice pour l'injection/l'extraction de fluide dans celle-ci.

Dans ce cas, l'évacuation des débris alimentaires s'effectue, comme pour un brossage classique, par rinçage de la bouche et de la gouttière élastique. Ce premier mode de réalisation correspond à une utilisation particulière qui, tout en restant accessoire, permet d'améliorer les conditions d'hygiène buccale de personnes en déplacement comme les militaires.

Conformément à un second mode de réalisation de la présente invention, particulièrement préféré car pouvant conférer au dispositif selon l'invention son efficacité maximale avec un cours temps de brossage des dents, les moyens d'injection/extraction de fluide injectent dans la gouttière, dans une phase d'injection, une dose d'au moins un fluide choisi parmi l'air, un gaz inerte et un liquide, en particulier un liquide nettoyant et/ou désinfectant, et extraient, dans une phase d'extraction, ladite dose de fluide de ladite gouttière.

En particulier, les moyens d'injection/extraction de fluide peuvent comprendre un premier circuit de fluide reliant un réservoir de fluide neuf à l'intérieur de la gouttière, un deuxième circuit de fluide reliant l'intérieur de la gouttière à un réservoir de fluide usagé, des moyens de pompe pour faire circuler du fluide neuf Fₙ dans le premier circuit de fluide neuf à la gouttière et pour faire circuler du fluide usagé dans le deuxième circuit de fluide de la gouttière au réservoir de fluide usagé, et des moyens de soupape pour isoler les deux circuits de fluide l'un de l'autre de telle sorte que la circulation du fluide neuf Fₙ est isolée de celle du fluide usagé Fᵤ.

Selon des caractéristiques particulières :
- le premier circuit de fluide comprend, dans l'ordre du réservoir de fluide neuf à la gouttière, une première soupape anti-retour, un raccordement à la chambre d'un premier piston et une deuxième soupape anti-retour ;
- le deuxième circuit de fluide comprend, dans l'ordre de la gouttière au réservoir de fluide usagé, une troisième soupape anti-retour, un raccordement à la chambre d'un deuxième piston et une quatrième soupape anti-retour ;
- lesdits premier et deuxième pistons ont des mouvements synchrones d'aspiration et de refoulement;
- les chambres des premier et deuxième pistons sont aptes à contenir une même dose de fluide ;
- les deuxième et quatrième soupapes anti-retour sont fermées par un déplacement d'aspiration respectivement des premier et deuxième pistons et ouvertes par un déplacement de refoulement respectivement des premier et deuxième pistons ;
- les première et troisième soupapes anti-retour sont fermées par un déplacement de refoulement respectivement des premier et deuxième pistons et ouvertes par un déplacement d'aspiration respectivement des premier et deuxième pistons ;
ce par quoi, lors d'un déplacement d'aspiration des premier et deuxième pistons, du fluide neuf Fₙ est aspiré du réservoir de fluide neuf dans la chambre du premier piston, le fluide usagé Fᵤ dans la gouttière étant quant à lui amené à passer dans la chambre du deuxième piston, le fluide usagé Fᵤ de la gouttière étant empêché de pénétrer dans le premier circuit de fluide par fermeture de la deuxième soupape anti-retour et le fluide usagé Fᵤ étant empêché de circuler vers le réservoir de fluide usagé par fermeture de la quatrième soupape anti-retour, et, lors d'un déplacement de refoulement des premier et deuxième pistons, du fluide neuf est éjecté de la chambre du premier piston vers la gouttière et du fluide usagé Fᵤ est éjecté de la chambre du deuxième piston vers le réservoir de fluide usagé, le fluide neuf Fₙ étant empêché de circuler dans le deuxième circuit de fluide par fermeture de la troisième soupape anti-retour et le fluide neuf Fₙ étant empêché de retourner vers le réservoir de fluide neuf par fermeture de la première soupape anti-retour, cet agencement permettant, dans les cycles d'injection/extraction de fluide, d'éviter tout mélange du fluide neuf Fₙ et du fluide usagé Fᵤ.

Des moyens de commande des pistons peuvent être constitués par un moteur électrique dont le mouvement de rotation est transformé en mouvement de translation desdits pistons par un dispositif mécanique, un rhéostat de commande de la fréquence des cycles de mise en pression et en dépression de la gouttière et/ou un temporisateur qui fixe le temps de fonctionnement du moteur pouvant être associés audit moteur.

Selon une variante particulière, le premier circuit de fluide comprend en outre, entre la deuxième soupape anti-retour et la gouttière un premier raccord, le deuxième circuit de fluide comprend en outre entre la gouttière et la troisième soupape anti-retour un deuxième raccord, lesdits premier et deuxième raccord permettant de connecter/déconnecter les premier et deuxième circuits de fluide à la gouttière, les premier et deuxième raccords étant en outre aptes à coopérer avec des raccords correspondants d'une poche pour insérer, la gouttière étant déconnectée des premier et deuxième circuits de fluide, ladite poche entre les premier et deuxième circuits de fluide pour nettoyer par vidange lesdits premier et deuxième circuits de fluide.

Les deux circuits de fluide peuvent déboucher dans la gouttière au voisinage l'un de l'autre, avantageusement dans la partie centrale avant de ladite gouttière. Le dispositif de la présente invention permet un procédé de nettoyage simultané des dents d'au moins une arcade, en adaptant sur l'une des arcades dentaires ou sur les deux la gouttière respectivement simple ou double d'un dispositif tel que défini ci-dessus et en conduisant des cycles répétés de contraction de celle-ci sur les dents et de relâchement de cette contraction jusqu'à obtention d'un nettoyage des dents et espaces inter-dentaires respectivement par aspiration d'un volume de fluide dans ladite gouttière puis par restitution dans celle-ci d'un volume équivalent de fluide.

Selon une caractéristique particulière facultative du procédé, on réalise 20 à 40 cycles répétés de contraction et de relâchement pendant un laps de temps de 10 à 20 secondes.

Ainsi, selon un mode de réalisation particulièrement préféré d'un nettoyage dentaire:
- dans un premier temps, un liquide de nettoyage est injecté par l'intermédiaire d'un piston à l'intérieur de la gouttière en matériau souple et élastique semblable à un protège-dents, englobant l'arcade dentaire. Ceci a pour effet une augmentation discrète de la pression à l'intérieur de cette gouttière élastique et la répartition uniforme du fluide injecté autour des dents et dans les espaces inter-dentaires ; et
- dans un deuxième temps, ce fluide de nettoyage est évacué par aspiration en suivant un circuit distinct du circuit d'injection et cette brève dépression contracte la gouttière élastique en plaquant contre les dents les poils dont elle est tapissée intérieurement. L'action mécanique des poils sur les dents détache la plaque dentaire. La répétition des cycles d'injection et d'éjection assure l'évacuation de la plaque et le nettoyage des dents.

Pour mieux illustrer l'objet de la présente invention, on va en décrire ci-après, à titre indicatif et non limitatif, plusieurs modes de réalisation avec référence au dessin annexé.

Sur ce dessin :
- la Figure 1 est une vue en perspective avec arrachement partiel d'un dispositif de nettoyage des dents d'une arcade supérieure conformément à un premier mode de réalisation de la présente invention ;
- la Figure 2 est une vue en perspective d'un dispositif de nettoyage des dents d'une arcade conformément à un second mode de réalisation de la présente invention ;
- les Figures 3 et 4 sont des vues schématiques en coupe de la gouttière de la Figure 1 en place sur l'arcade supérieure, au niveau d'une prémolaire, dans les positions respectives de relâchement et de contraction ;
- les Figures 5 et 6 sont des vues schématiques en coupe de la gouttière de la Figure 1 en place sur l'arcade supérieure, au niveau d'une incisive centrale, dans les positions respectives de relâchement et de contraction ;
- les Figures 7 et 8 sont des vues schématiques en coupe d'une double gouttière en place sur les arcades supérieure et inférieure, au niveau respectivement de prémolaires et d'incisives centrales dans la position de relâchement ;
- les Figures 9 et 10 sont des vues analogues aux Figures respectivement 7 et 8 d'une variante de la double gouttière ;
- les Figures 11 et 12 sont des schémas illustrant le trajet de liquides neuf et usagé respectivement vers et à partir de la gouttière du dispositif de la Figure 1, provoquant respectivement le relâchement de ladite gouttière vis-à-vis de son contact avec les dents, et la contraction de ladite gouttière, laquelle vient enserrer les dents ; et
- la Figure 13 est une vue schématique d'un générateur de pression-dépression assurant une répétition à fréquence élevée des cycles de relâchement-contraction.

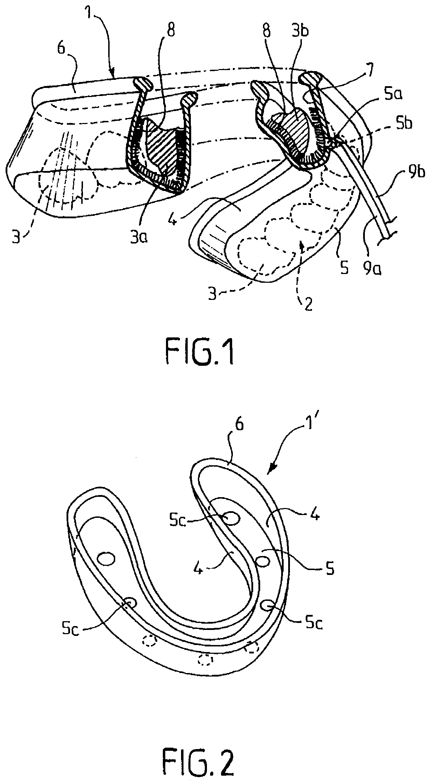

Si l'on se réfère à la Figure 1, on peut voir que l'on a représenté une coque ou gouttière simple 1, fermée à ses extrémités, ayant la forme d'un arc correspondant à une arcade dentaire 2, la gouttière 1 étant représentée en place autour de cette arcade 2, autrement dit dans la position où elle englobe les dents 3 de cette arcade 2.

La gouttière 1 présente une section ayant la forme générale d'un U, présentant deux parois latérales 4 réunies à leurs extrémités en regard et raccordées à un fond 5. Les deux parois latérales 4 se resserrent légèrement l'une vers l'autre au voisinage de leurs bordures libres, où elles forment un bourrelet 6, lequel s'étend sur toute la périphérie de la gouttière 1. Le bourrelet 6 a une section grossièrement cylindrique.

Dans l'exemple illustré, la gouttière 1 est fabriquée en silicone, à partir d'un moule permettant d'obtenir une épaisseur de silicone d'environ 2 mm, d'indice de dureté moyen (Shore 30), épousant la forme de l'arcade dentaire ; le bourrelet plus épais 6 correspond à un cylindre d'environ 4 mm de diamètre et est réalisé avec un silicone d'indice de dureté plus bas (Shore 10).

Comme indiqué, les parois resserrées de la gouttière 1 le long de sa bordure libre permettent d'exercer sur la muqueuse une certaine pression de rétention.

La surface interne 7 de la gouttière 1, c'est-à-dire sa surface interne en contact avec les dents 3, est tapissée de poils 8 dont la base est intégrée dans la paroi de silicone. Ils sont distribués comme le seraient les poils d'une brosse à dents mais sont moins longs et plus flexibles. En effet l'espace qui leur est réservé étant faible (1 à 3 mm dans l'exemple représenté), leur longueur est choisie pour assurer le nettoyage des tissus gingivaux et dentaires sans les léser. Ils sont avantageusement réalisés en fil de Nylon à extrémité arrondie, toujours pour ne pas léser les tissus gingivaux et dentaires.

Sur les parties gauche et droite de la Figure 1, on peut voir plus précisément la position de la gouttière 1 par rapport à l'arcade respectivement au niveau d'une coupe passant par la deuxième prémolaire 3a et au niveau d'une coupe passant par l'incisive centrale droite 3b.

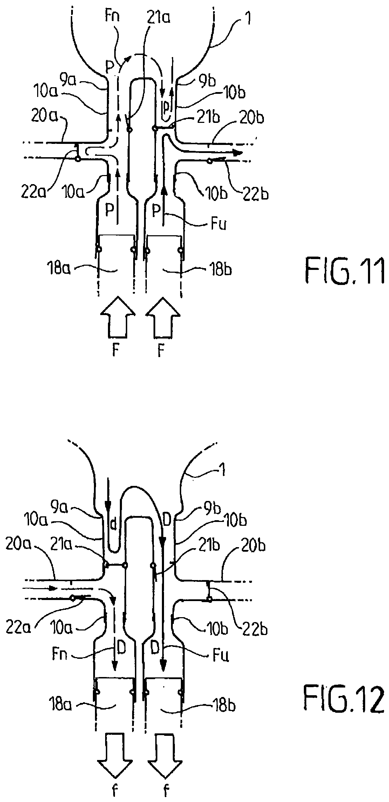

La gouttière 1, une fois en place sur l'arcade 2, est susceptible de recevoir un fluide neuf Fₙ de balayage des détritus détachés des dents 3 lors du nettoyage, le fluide usagé Fᵤ devant ensuite être évacué (voir Figures 11 et 12 qui seront décrites plus en détail ci-après).

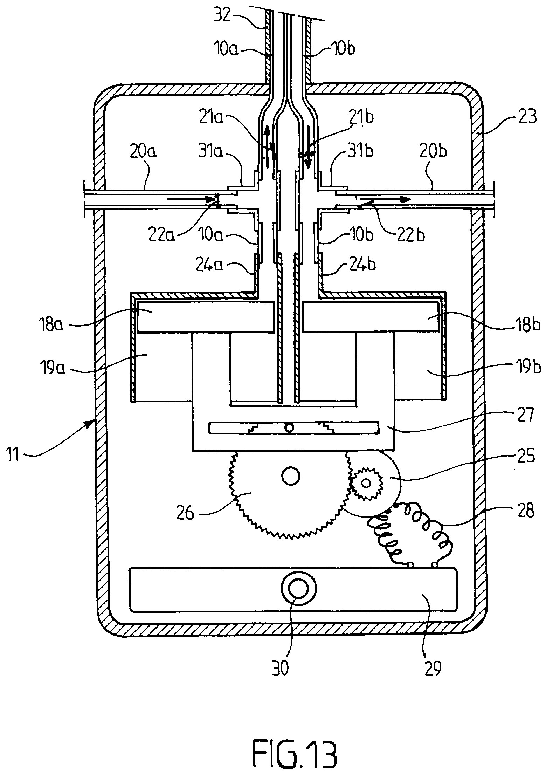

L'injection et le retrait de ce fluide de nettoyage à l'intérieur et hors de la gouttière 1 se fait par l'intermédiaire de deux orifices 5a, 5b ménagés dans la partie antérieure de celle-ci, juste en regard du bord libre des incisives. Ces deux orifices 5a, 5b constituent les zones de raccordement de deux conduits de transmission extérieurs à la gouttière 1, respectivement 9a, 9b, de quelques centimètres de long, lesquels se terminent par un raccord (non représenté) d'un système de connexion de deux conduits correspondant 10a, 10b provenant du générateur de pression-dépression 11, comme cela sera décrit ci-après avec référence à la Figure 13.

Ces conduits de transmission 9a, 9b pourraient être placés indifféremment en tout point de cette surface. Néanmoins pour des raisons d'accessibilité et de confort, il est judicieux de les placer dans la partie antérieure de la gouttière 1, face aux incisives centrales comme représenté sur la Figure 1.

Sur la Figure 2, on a représenté une gouttière 1', analogue à la gouttière 1, mais n'étant pas tapissée de poils, ne comportant pas d'orifices auxquels se raccordent les conduits 9a, 9b de transmission avec un générateur de pression-dépression 11, et comportant des orifices 5c pratiqués dans son fond 5.

La gouttière 1' constitue une gouttière indépendante et autonome qui peut assurer un nettoyage des dents suivant le principe de contraction-relâchement sur les dents à nettoyer sous l'action des mouvements de la bouche de l'utilisateur lui-même, l'air et/ou la salive traversant les orifices 5c. Ce mode de réalisation représente un cas particulier ayant son utilité dans certaines circonstances comme évoqué plus haut.

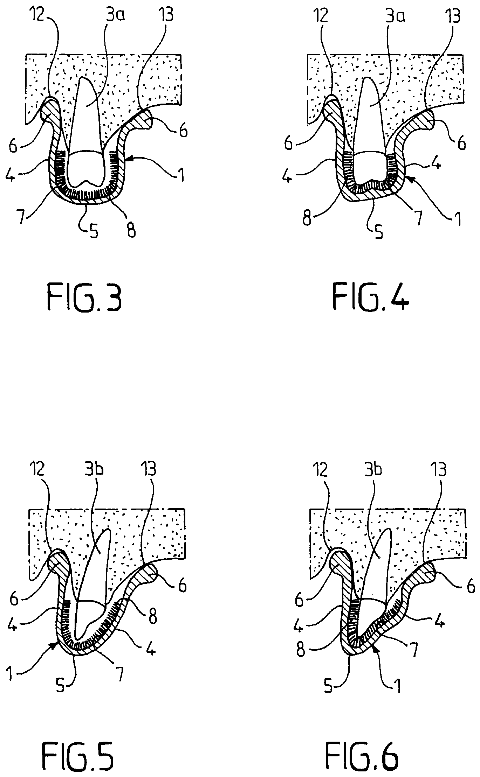

Les Figures 3 et 4 reprennent en les précisant les coupes de la gouttière 1 passant par la prémolaire 3a dans les positions respectives de relâchement et de contraction, les poils 8 se resserrant sur la dent en position de contraction. Sur le dessin, on a représenté la gouttière 1 avec les extrémités des poils non en appui sur les dents en position de relâchement de la Figure 3. Dans la réalité, les poils 8 pourront déjà être en appui sur les dents dans cette position.

Sur les Figures 3 et 4, on peut noter l'adaptation du bourrelet périphérique 6 avec le sulcus gingivo-jugal 12 ainsi qu'avec le palais 13.

Les Figures 5 et 6 sont analogues aux Figures respectivement 3 et 4, montrant la gouttière 1 au niveau d'une incisive centrale 3b.

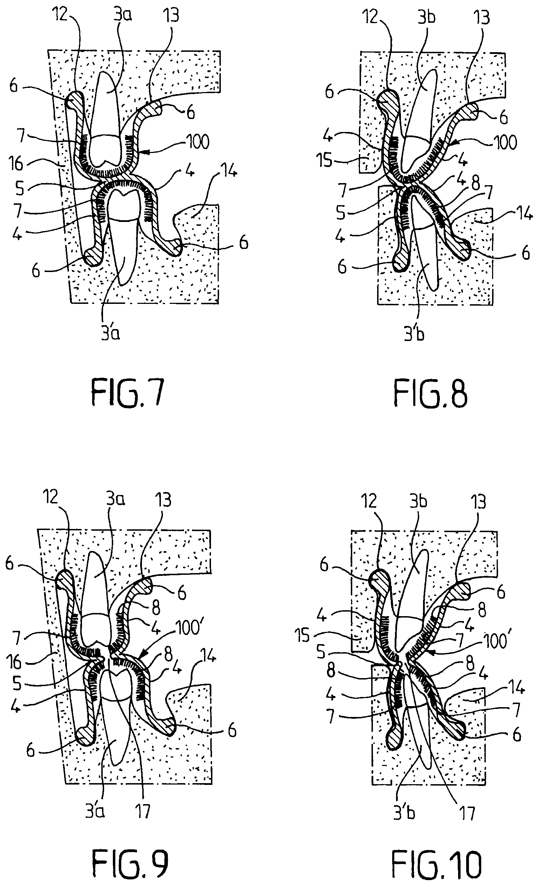

Si l'on se réfère aux Figures 7 et 8, sur lesquelles on a schématisé la langue 14, la lèvre supérieure 15 et la joue 16, on peut voir que l'on a représenté des vues analogues aux Figures respectivement 3 et 5 d'une gouttière double 100 apte à englober à la fois l'arcade supérieure et l'arcade inférieure d'une dentition. La gouttière double 100 est constituée par deux gouttières telles que la gouttière 1, dont les ouvertures sont orientées dans des directions opposées et qui sont accolées par leurs fonds 5.

Comme indiqué précédemment, des conduits tels que les conduits 9a, 9b, seront associés à chaque gouttière de cette double gouttière 100.

Si l'on se réfère aux Figures 9 et 10, on peut voir que l'on a représenté des vues analogues aux Figures respectivement 7 et 8, montrant une double gouttière 100' réalisée conformément à une variante de la gouttière 100 des Figures 7, 8, variante suivant laquelle le fond commun 5 présente au moins un orifice 17, le ou les orifices 17 étant capables de transmettre les différences de pression d'une gouttière à l'autre de la double gouttière 100'.

La double gouttière 100' ne comporte alors qu'un seul conduit 9a et qu'un seul conduit 9b.

Si l'on se réfère aux Figures 11 et 12, on peut voir que l'on a représenté schématiquement la circulation d'un fluide neuf Fₙ injecté dans une gouttière 1 pour en provoquer le relâchement de sa paroi, la mettant hors de son contact avec les dents, et celle d'un fluide usagé Fᵤ dont le retrait par dépression hors de la gouttière 1 provoque la contraction de la paroi de celle-ci contre les dents. Par des cycles répétés et très rapides de relâchement-contraction, on obtient un parfait nettoyage des dents en un laps de temps très court comme cela sera décrit ci-après.

A cet effet, des pistons 18a, 18b se déplacent dans une chambre respectivement 19a, 19b (Figure 13) pour repousser ou aspirer des volumes des fluides respectivement Fₙ et Fᵤ, lesquels communiquent avec les conduits respectivement 10a, 10b (Figure 13) eux-mêmes reliés aux conduits respectivement 9a, 9b (Figure 1).

Sur le trajet de chacun des conduits 10a, 10b, se trouve un branchement, respectivement 20a, 20b, le fluide Fₙ arrivant dans le conduit 10a par le branchement 20a, et le fluide usé Fᵤ sortant par le conduit 10b vers le branchement 20b.

Des soupapes anti-retour 21a, 21b sont disposées sur le trajet des conduits respectivement 10a, 10b entre les branchements respectivement 20a, 20b et les conduits de transmission 9a, 9b, et des soupapes anti-retour 22a, 22b sont disposées sur le trajet des branchements respectivement 20a, 20b. Des petits traits de butée ont été représentés schématiquement sur les Figures 11 et 12 au niveau des soupapes anti-retour 21a, 21b, 22a, 22b afin de mieux illustrer les deux positions extrêmes ouverte et fermée qu'elles peuvent prendre et, en conséquence, le sens de circulation des fluides.

Sur la Figure 11, on peut voir que l'enfoncement simultané des pistons 18a, 18b selon les flèches F crée une pression P qui ferme les soupapes 21b et 22a, ouvre la soupape 21a et envoie dans la gouttière 1 la dose de fluide neuf Fₙ contenue dans la chambre du piston 18a, provoquant le relâchement de la gouttière 1 vis-à-vis de son contact avec les dents, cependant que la dose de fluide usé Fᵤ contenue dans la chambre du piston 18b est évacuée vers l'extérieur du système par le branchement 20b, la soupape 21b se fermant et la soupape 22b s'ouvrant sous la pression du fluide Fᵤ.

Sur la Figure 12, on peut voir que le retrait simultané des pistons 18a, 18b selon les flèches f crée une dépression D qui ouvre la soupape 22a, ferme la soupape 21a, afin d'amener une dose de fluide Fₙ dans la chambre du piston 18a - laquelle dose sera prête à être éjectée dans la gouttière 1 lorsque la course du piston 18a s'inversera, et d'amener la dose de fluide Fᵤ en provenance de la gouttière 1 dans la chambre du piston 18b, par l'ouverture de la soupape 21b et la fermeture de la soupape 22b en raison de la dépression D provenant du retrait du piston 18b, la dose de fluide Fᵤ ainsi recueillie dans la chambre du piston 18b étant prête à être éjectée vers l'extérieur par le branchement 20b lorsque la course du piston 18b s'inversera.

Sur la Figure 11, lors des refoulements des pistons 18a, 18b, la soupape 21b est fermée par mise en butée par la pression P côté piston 18b. La gouttière 1 est gonflée par la pression P provenant du conduit 10a, ce qui induit une circulation de fluide dans le conduit 10b avec une pression réduite p ; la différence de pression de part et d'autre de la soupape 21b maintient celle-ci fermée.

Sur la Figure 12, lors des aspirations des pistons 18a, 18b, la soupape 21a est fermée par mise en butée par la dépression D côté piston 18a. La gouttière 1 est comprimée par la dépression D provenant du conduit 10b, ce qui induit une circulation de fluide dans le conduit 10a avec une dépression réduite d ; la différence de pression de part et d'autre de la soupape 21a maintient celle-ci fermée.

Sur la Figure 13, on a représenté schématiquement un générateur de pression-dépression 11, fonctionnant selon le principe qui vient d'être décrit avec référence aux Figures 11 et 12. Sur cette Figure 13, il est représenté dans la position où les pistons 18a, 18b ont complètement refoulé les doses de fluide respectivement Fₙ et Fᵤ qu'ils avaient précédemment aspirées.

Les mêmes chiffres de référence ont été repris des Figures 11 et 12 pour désigner des parties analogues.

Dans un boîtier 23, sont montés les pistons 18a, 18b aptes à coulisser dans leurs chambres 19a, 19b. Les volumes de fluide déplacés par les pistons 18a, 18b passant dans des parties tubulaires respectives 24a, 24b, constituées par des prolongements des parois délimitant les chambres 19a, 19b, lesquelles sont reliées hermétiquement à la base des conduits 10a, 10b.

Est également monté dans le boîtier 23, un moteur électrique 25, capable d'entraîner une roue dentée 26 qui coopère avec un dispositif mécanique classique 27 transformant le mouvement de rotation en un mouvement de translation répétitif pour l'entraînement en va-et-vient des pistons 18a, 18b. A cet effet, le dispositif 27 est connecté à la base des deux pistons 18a, 18b et le moteur électrique 25, alimenté par des fils de connexion 28 connectés à des batteries 29, transmet aux deux pistons 18a, 18b un mouvement alternatif d'avant en arrière permettant des cycles répétitifs d'enfoncement, puis de retrait.

Le système électronique de commande du moteur 25 a été également désigné par le chiffre de référence 29, le boîtier référencé par le chiffre de référence 29 comprenant les batteries et le système électronique de commande du moteur 25. Les boutons de commande du système électronique de commande du moteur sont désignés par le chiffre de référence 30.

Le boîtier 23 contient également le tube d'injection du fluide Fₙ (branchement 20a), monté sur le conduit 10a (réalisé alors en deux parties) par un raccord en T 31a, et le tube d'éjection du fluide Fᵤ (branchement 20b) monté sur le conduit 10b (réalisé alors en deux parties) par un raccord en T 31b.

Le boîtier 23 contient également les quatre soupapes anti-retour 21a, 22a, 21b, 22b.

Le boîtier hermétique 23 enveloppe et sécurise l'ensemble du dispositif 11 précédemment décrit et ne laisse dépasser à l'extérieur que les quatre conduits 10a, 10b, 20a, 20b.

Les conduits 10a, 10b, destinés à la gouttière 1, sont regroupés dans une gaine commune 32. Leur longueur, pour des raisons de confort de manipulation est d'environ 1 mètre. Ils sont terminés par un raccord d'un dispositif de connexion prévu pour se clipser hermétiquement dans le raccord correspondant situé à l'extrémité des conduits 9a, 9b à l'avant de la gouttière 1 et permettant le raccordement des conduits 9a et 10a et des conduits 9b et 10b lors du brossage des dents.

Ce système de raccordement doit en effet pouvoir autoriser sans dommage, sans s'altérer, de façon aisée et à de multiples reprises, sa connexion et sa déconnexion aux conduits 10a, 10b qui relient la gouttière 1 au générateur de pression-dépression 11 pour assurer hermétiquement l'injection et l'évacuation des liquides de nettoyage.

Il est possible pour ce faire, de recourir à toute solution technique appropriée du moment que celle-ci garantisse une transmission correcte des flux assurant alternativement le relâchement et la contraction de la gouttière ; toutefois un dispositif du genre « clip », tel qu'évoqué ci-dessus, reste le plus aisé à mettre en oeuvre.

Les deux autres conduits 20a, 20b, destinés respectivement à transporter le fluide Fₙ depuis son récipient de stockage et à transporter le fluide Fᵤ dans son récipient d'évacuation, restent indépendants et reçoivent un marquage suffisamment explicite pour éviter toute erreur de manipulation. Ils sont plus courts que les précédents.

L'une des faces du boîtier 23 comporte un pavé de commandes imperméables permettant la mise en marche et l'arrêt du moteur électrique 25. Cet ensemble de boutons 30 peut également commander par l'intermédiaire d'un rhéostat la fréquence des cycles d'aspiration-éjection et éventuellement fixer le temps de fonctionnement du moteur 25 grâce à un temporisateur.

Sur une autre de ses faces, le boîtier 23 comporte une trappe donnant accès au logement des batteries 29 permettant de les remplacer lorsqu'elles sont usagées. Le système de fermeture de cette trappe la rend complètement imperméable à l'eau.

Le système de connexion entre la gouttière 1 et le générateur de pression-dépression 11 doit assurer une parfaite propreté à tous les utilisateurs d'une gouttière personnelle qui utiliseraient un même générateur 11. Un seul générateur 11 permettant en effet le fonctionnement de plusieurs gouttières 1, les problèmes engendrés par d'éventuelles contaminations croisées doivent faire l'objet d'une vigilance particulière.

A cet effet, la région de l'extrémité du double tuyau 10a, 10b gainé en 32 en provenance du générateur 11 peut avantageusement être pourvue juste avant son système de connexion avec les extrémités des conduits 9a, 9b de la gouttière 1 d'une deuxième paire de soupapes anti-retour, aptes à s'ouvrir et à se fermer dans le même sens que les soupapes anti-retour 21a, 21b.

Pour la même raison, les conduits 9a, 9b ont une longueur minimum de manière à éviter tout reflux de liquide éventuellement contaminé provenant de la gouttière 1 à l'intérieur du conduit 10a permettant l'injection du fluide de nettoyage.

Pour terminer, à l'issue d'une séance d'utilisation, le générateur de pression-dépression 11 et le réseau de conduits 10a, 10b, 20a, 20b doivent être vidangés grâce à une pièce permettant le raccordement du conduit d'injection 10a et du conduit d'aspiration 10b.

Ainsi, une pièce de vidange du réseau de conduits est prévue pour être raccordée au système à la place de la gouttière 1 à l'issue de l'utilisation de celle-ci. Cette pièce est constituée d'un raccord correspondant à celui de l'extrémité des conduits 10a, 10b et comporte une chambre ou poche hermétique en matière élastique, par exemple d'un volume de 1 à 2 cm³, destinée à se gonfler et à se contracter en fonction de la circulation des fluides. Elle est insérée à la place de la gouttière 1 une fois l'utilisation de celle-ci terminée et permet de fermer le circuit pour une vidange finale du dispositif.

Elle est destinée à rester en place pour fermer le circuit et permettre le rangement du dispositif de nettoyage. Dans ce mode de réalisation particulier, cette pièce est fixée au boîtier 23 du générateur 11.

Les raccords du système comportent avantageusement un détrompeur pour empêcher une inversion des conduits.

Avec la gouttière 1 et son générateur de pression-dépression 11, l'utilisateur désirant effectuer un nettoyage dentaire s'assurera dans un premier temps que les embouts des conduits 20a, 20b destinés à puiser et évacuer le liquide de nettoyage plongent bien dans leurs récipients respectifs.

L'utilisateur insérera ensuite les raccords des conduits 9a, 9b de sa gouttière 1 aux raccords correspondants des conduits 10a, 10b du générateur 11, en respectant le sens fixé par la forme des parties mâle et femelle des raccords. Leur forme est avantageusement telle qu'elle n'autorise leur coopération (coaptation) que dans une seule position. Un clic émis par une languette de matière plastique souple s'insérant dans son logement en fin de course, indique que le verrouillage est total. On notera que, lors de la désinsertion, une simple pression sur la base de cette languette déverrouillera le système.

Après avoir humecté la gouttière 1 en la passant sous l'eau, l'utilisateur l'insérera dans sa bouche, à l'une des deux arcades.

Il commandera alors la mise en marche du moteur électrique 25 du générateur 11 en appuyant sur le bouton de déclenchement 30 situé sur le boîtier 23.

A partir du déclenchement et jusqu'à l'arrêt du moteur, les cycles de fonctionnement suivants vont se reproduire environ 2 fois par seconde:
- Aspiration du liquide de nettoyage neuf du récipient vers la chambre du premier piston 18a et parallèlement dépression exercée dans la gouttière 1 ayant pour conséquence une contraction (constriction) des poils 8 autour des dents et l'éjection des fluides contenus dans l'espace ainsi rétréci. Aspiration de ces fluides dans la chambre du deuxième piston 18b
- Injection du liquide de nettoyage neuf de la chambre du premier piston 18a vers la gouttière 1 et parallèlement retour à la normale de la forme de celle-ci ayant pour conséquence une répartition de ce liquide autour des dents dans l'espace ainsi libéré. Évacuation des fluides contenus dans la chambre du deuxième piston 18b vers le récipient de destination.

Le nombre de cycles estimé pour un nettoyage complet est d'environ 30, soit approximativement 15 secondes de fonctionnement.

Une fois la première arcade dentaire nettoyée, l'utilisateur insérera sa gouttière à l'arcade antagoniste pour 30 nouveaux cycles.

Après avoir retiré sa gouttière, il pourra la déconnecter du générateur de pression-dépression 11 et la rincer brièvement sous l'eau. Puis il effectuera une vidange des circuits du dispositif en connectant la pièce de raccordement en lieu et place de la gouttière 1 et en effectuant quelques cycles à vide. Cette pièce de raccordement restera connectée jusqu'à l'utilisation suivante du dispositif de nettoyage dentaire. Pour des raisons pratiques cette pièce est, comme déjà indiqué, dans ce mode de réalisation particulier de l'invention, fixée au boîtier du générateur de pression-dépression 11 et facilite son rangement.

La gouttière selon l'invention est un dispositif amovible, indépendant. Elle est personnelle et individuelle au même titre que le serait une brosse à dent. Un groupe d'individus peut n'utiliser qu'un seul générateur de pression-dépression et chacun y connecter sa gouttière personnelle.

Les gouttières ont une durée de vie limitée et doivent être changées régulièrement. Chacun pourra choisir parmi une déclinaison de tailles différentes, la gouttière la mieux adaptée à la forme de sa denture. Un dispositif à usage unique permettant d'enregistrer la forme de l'arcade dentaire facilitera ce choix.

Il est bien entendu que les modes de réalisation qui viennent d'être décrits ont été donnés à titre indicatif et non limitatif et que des modifications peuvent y être apportées, le cadre de la présente invention étant délimité par les revendications.

## Revendications

1. Dispositif de nettoyage dentaire permettant le nettoyage simultané des dents d'au moins une arcade, le dispositif comprenant une gouttière (1 ; 1' ; 100 ; 100') en arc, simple ou double, apte à englober les dents respectivement d'une arcade ou des deux arcades à la fois et à s'adapter, par sa ou ses bordures libres, sur la ou les gencives correspondantes, ladite gouttière (1 ; 1' ; 100 ; 100') étant réalisée en un matériau souple acceptant une déformation réversible et compatible avec un usage médical, et **caractérisé par le fait que** le dispositif comprend des moyens d'injection/extraction de fluide pour injecter du fluide dans la gouttière et extraire ledit fluide de l'intérieur de la gouttière, lesdits moyens d'injection/extraction de fluide soumettant la gouttière, une fois celle-ci mise en place sur les dents pour leur nettoyage, à des cycles répétés d'injection/extraction de fluide provoquant des cycles de mise en pression/dépression de la gouttière pour un nettoyage des dents par action combinée, dans la gouttière, de circulation de fluide sur les dents et entre les dents et action mécanique de la surface interne (7) de la gouttière sur les dents, résultant du relâchement, respectivement de la constriction, de la gouttière lors des cycles d'injection, respectivement d'extraction.

2. Dispositif selon la revendication 1, **caractérisé par le fait que** la gouttière (1 ; 100 ; 100') présente, sur au moins une partie de sa surface interne (7), un état de surface non lisse ou un revêtement ou interface non lisse, lui permettant de favoriser la déstructuration de la plaque dentaire.

3. Dispositif selon la revendication 2, **caractérisé par le fait que** la gouttière (1 ; 100 ; 100') présente une surface interne partiellement ou totalement tapissée de reliefs, notamment des poils (8) à la manière d'une brosse, ou présente une interface souple, poreuse, du type mousse ou éponge, légèrement abrasive, présentant des propriétés mécaniques compatibles avec le nettoyage dentaire, interface qui est interposée entre la gouttière et les dents.

4. Dispositif selon l'une des revendications 1 à 3, **caractérisé par le fait que** le matériau souple de la gouttière (1 ; 1' ; 100 ; 100') est choisi parmi les matériaux souples imperméables aux gaz et aux liquides, tels que le latex ou le silicone compatible avec un usage médical.

5. Dispositif selon l'une des revendications 1 à 4, **caractérisé par le fait que** la ou les bordures libres de la gouttière (1 ; 1' ; 100 ; 100') respectivement simple ou double est épaissie en forme de bourrelet (6).

6. Dispositif selon l'une des revendications 1 à 5, comportant une gouttière double, **caractérisé par le fait que** ladite gouttière double (100 ; 100') est constituée par deux gouttières simples accolées par leur fond avec ou sans ouverture(s) (17) de communication entre les deux.

7. Dispositif selon l'une des revendications 1 à 6, **caractérisé par le fait que** la gouttière porte un organe de préhension pour constituer un manche facilitant son introduction dans la bouche.

8. Dispositif selon l'une des revendications 1 à 7, **caractérisé par le fait que** la gouttière est insérée dans un réceptacle rigide apte à être introduit dans la bouche, ledit réceptacle pouvant comporter un organe de préhension pour constituer un manche facilitant son introduction dans la bouche.

9. Dispositif selon l'une des revendications 1 à 8, **caractérisé par le fait qu'**il comporte un plan de morsure ou d'occlusion situé en regard de la partie triturante des dents antagonistes pour permettre son maintien en bouche par fermeture des mâchoires, ledit plan de morsure ou d'occlusion étant porté par la gouttière ou par un organe de préhension porté par la gouttière ou par un réceptacle rigide dans lequel est insérée la gouttière.

10. Dispositif selon l'une des revendications 1 à 9, **caractérisée par le fait que** la gouttière comprend au moins un orifice (5a) pour l'injection/extraction de fluide dans celle-ci.

11. Dispositif selon la revendication 9, **caractérisé par le fait que** les moyens d'injection/extraction de fluide comprennent un premier circuit de fluide reliant un réservoir de fluide neuf à l'intérieur de la gouttière (1 ; 1' ; 100 ; 100'), un deuxième circuit de fluide reliant l'intérieur de la gouttière (1 ; 1' ; 100 ; 100') à un réservoir de fluide usagé, des moyens de pompe pour faire circuler du fluide neuf (Fn) dans le premier circuit de fluide neuf à la gouttière (1 ; 1' ; 100 ; 100') et pour faire circuler du fluide usagé dans le deuxième circuit de fluide de la gouttière (1 ; 1' ; 100 ; 100') au réservoir de fluide usagé, et des moyens de soupape pour isoler les deux circuits de fluide l'un de l'autre de telle sorte que la circulation du fluide neuf (Fn) est isolée de celle du fluide usagé (Fu), les moyens d'injection/extraction de fluide injectant dans la gouttière (1 ; 1' ; 100 ; 100'), dans une phase d'injection, une dose d'au moins un fluide choisi parmi l'air, un gaz inerte et un liquide, en particulier un liquide nettoyant et/ou désinfectant, et extraient, dans une phase d'extraction, ladite dose de fluide de ladite gouttière (1 ; 1' ; 100 ; 100').

12. Dispositif selon la revendication 11, **caractérisé par le fait que**:
- le premier circuit de fluide comprend, dans l'ordre du réservoir de fluide neuf à la gouttière (1 ; 1' ; 100 ; 100'), une première soupape anti-retour (22a), un raccordement à la chambre d'un premier piston (18a) et une deuxième soupape anti-retour (21a) ;
- le deuxième circuit de fluide comprend, dans l'ordre de la gouttière (1 ; 1' ; 100 ; 100') au réservoir de fluide usagé, une troisième soupape anti-retour (21b), un raccordement à la chambre d'un deuxième piston (18b) et une quatrième soupape anti-retour (22b) ;
- lesdits premier et deuxième pistons (18a et 18b) ont des mouvements synchrones d'aspiration et de refoulement;
- les chambres des premier et deuxième pistons (18a et 18b) sont aptes à contenir une même dose de fluide ;
- les deuxième (21a) et quatrième (22b) soupapes anti-retour sont fermées par un déplacement d'aspiration (f) respectivement des premier (18a) et deuxième (18b) pistons et ouvertes par un déplacement de refoulement (F) respectivement des premier (18a) et deuxième (18b) pistons ;
- les première (22a) et troisième (21b) soupapes anti-retour sont fermées par un déplacement de refoulement (F) respectivement des premier (18a) et deuxième (18b) pistons et ouvertes par un déplacement d'aspiration (f) respectivement des premier (18a) et deuxième (18b) pistons ;
ce par quoi, lors d'un déplacement d'aspiration (f) des premier (18a) et deuxième (18b) pistons, du fluide neuf (Fn) est aspiré du réservoir de fluide neuf dans la chambre du premier piston (18a), le fluide usagé (Fu) dans la gouttière (1 ; 1' ; 100 ; 100') étant quant à lui amené à passer dans la chambre du deuxième piston (18b), le fluide usagé (Fu) de la gouttière (1 ; 1' ; 100 ; 100') étant empêché de pénétrer dans le premier circuit de fluide par fermeture de la deuxième soupape anti-retour (21a) et le fluide usagé (Fu) étant empêché de circuler vers le réservoir de fluide usagé par fermeture de la quatrième soupape anti-retour (22b), et, lors d'un déplacement de refoulement des premier (18a) et deuxième (18b) pistons, du fluide neuf est éjecté de la chambre du premier piston (18a) vers la gouttière (1 ; 1' ; 100 ; 100') et du fluide usagé (Fu) est éjecté de la chambre du deuxième piston (18b) vers le réservoir de fluide usagé, le fluide neuf (Fn) étant empêché de circuler dans le deuxième circuit de fluide par fermeture de la troisième soupape anti-retour (21b) et le fluide neuf (Fn) étant empêché de retourner vers le réservoir de fluide neuf par fermeture de la première soupape anti-retour (22a), cet agencement permettant, dans les cycles d'injection/extraction de fluide, d'éviter tout mélange du fluide neuf (Fn) et du fluide usagé (Fu).

13. Dispositif selon la revendication 12, **caractérisé par le fait que** des moyens de commande des pistons sont constitués par un moteur électrique (25) dont le mouvement de rotation est transformé en mouvement de translation desdits pistons (18a et 18b) par un dispositif mécanique (27), un rhéostat de commande de la fréquence des cycles de mise en pression et en dépression de la gouttière et/ou un temporisateur qui fixe le temps de fonctionnement du moteur pouvant être associés au moteur.

14. Dispositif selon l'une des revendications 11 à 13, **caractérisé par le fait que** le premier circuit de fluide comprend en outre, entre la deuxième soupape anti-retour (21a) et la gouttière (1 ; 1' ; 100 ; 100') un premier raccord, que le deuxième circuit de fluide comprend en outre entre la gouttière (1 ; 1' ; 100 ; 100') et la troisième soupape anti-retour (21b) un deuxième raccord, lesdits premier et deuxième raccords permettant de connecter/déconnecter les premier et deuxième circuits de fluide à la gouttière (1 ; 1' ; 100 ; 100'), les premier et deuxième raccords étant en outre apte à coopérer avec des raccords correspondants d'une poche pour insérer, la gouttière (1 ; 1' ; 100 ; 100') étant déconnectée des premier et deuxième circuits de fluide, ladite poche entre les premier et deuxième circuits de fluide pour nettoyer par vidange lesdits premier et deuxième circuits de fluide.

15. Dispositif selon l'une des revendications 12 à 14, **caractérisé par le fait que** les deux circuits de fluide débouchent dans la gouttière (1) au voisinage l'un de l'autre, avantageusement dans la partie centrale avant de ladite gouttière (1).

16. Dispositif selon la revendication 9, **caractérisé par le fait que** les moyens d'injection/extraction de fluide consistent en au moins un orifice (5a) pratiqué dans ladite gouttière (1') permettant l'aspiration par le porteur lui-même de l'air et/ou de la salive qu'elle contient en vue de sa contraction, puis, lorsque le porteur cesse d'aspirer, la restitution de l'air et/ou de la salive dans ladite gouttière (1') en vue du relâchement de celle-ci.

## Patentansprüche

1. Vorrichtung zum Zähneputzen zum gleichzeitigen Reinigen der Zähne mindestens eines Zahnbogens, wobei die Vorrichtung eine bogenförmige Schiene (1 ; 1' ; 100 ; 100') umfasst, einfach oder doppelt, die fähig ist, die Zähne bzw. einen Zahnbogen oder beide Zahnbögen gleichzeitig zu umfassen und sich, durch seinen freien Rand oder seine freien Ränder, an das Zahnfleisch anzupassen, wobei die Schiene, (1 ; 1' ; 100 ; 100') aus einem biegsamen Material hergestellt ist, das umkehrbar verformbar und mit einem medizinischen Einsatz vereinbar ist, und **gekennzeichnet dadurch, dass** die Vorrichtung Mittel zur Fluidinjektion/-extraktion umfasst, um Fluid in die Schiene einzuspritzen und das Fluid aus der Schiene zu entfernen, die Mittel zur Fluidinjektion/- extraktion unterziehen die Schiene, wenn letztere auf den Zähnen platziert ist zu deren Reinigung, wiederholten Fluidinjektions/-extraktionszyklen, die Zyklen des Druckaufbaus/Unterdruckaufbaus der Schiene zum Reinigen der Zähne bewirken, durch kombinierte Wirkung, in der Schiene, eines Fluidkreislaufs auf den Zähnen und zwischen den Zähnen und mechanischer Wirkung der Innenfläche (7) der Schiene auf die Zähne aufgrund der Lockerung bzw. der Festziehung der Schiene in den Injektions- bzw. Extraktionszyklen.

2. Vorrichtung nach Anspruch 1, **gekennzeichnet dadurch, dass** die Schiene (1, 100,100') auf mindestens einem Teil ihrer Innenfläche (7) einen nicht glatten Oberflächenzustand oder Überzug oder nicht glatte Grenzfläche aufweist, wodurch sie die Destrukturierung des Zahnbelags begünstigt.

3. Vorrichtung nach Anspruch 2, **gekennzeichnet dadurch, dass** die Schiene (1, 100,100') eine Innenfläche aufweist, die teilweise oder völlig von Reliefs bedeckt ist, vor allem Haare (8) nach Art einer Bürste, oder eine biegsame Grenzfläche aufweist, porös, wie Schaumstoff oder Schwamm, etwas abrasiv, mit mit dem Zähneputzen kompatiblen mechanischen Eigenschaften, wobei die Grenzfläche sich zwischen der Schiene und den Zähnen befindet.

4. Vorrichtung nach einem der Ansprüche 1 bis 3, **gekennzeichnet dadurch, dass** das biegsame Material der Schiene (1 ; 1' ; 100 ; 100') aus den gasdichten und flüssigkeitsdichten flexiblen Materialien gewählt ist, wie Latex oder Silikon, vereinbar mit einem medizinischen Einsatz.

5. Vorrichtung nach einem der Ansprüche 1 bis 4, **gekennzeichnet dadurch, dass** der freie Rand oder die freien Ränder der Schiene (1 ; 1' ; 100 ; 100'), einfach oder doppelt, in Form eines Polsters (6) verdickt sind.

6. Vorrichtung nach einem der Ansprüche 1 bis 5, mit einer doppelten Schiene, **gekennzeichnet dadurch, dass** die doppelte Schiene (100,100') aus zwei einfachen Schienen besteht, die durch ihren Boden aneinandergefügt sind, mit oder ohne Kommunikations-Öffnung(en) (17) zwischen den beiden.

7. Vorrichtung nach einem der Ansprüche 1 bis 6, **gekennzeichnet dadurch, dass** die Schiene ein Greiforgan trägt, das einen Arm bildet, der ihre Einführung in den Mund erleichtert.

8. Vorrichtung nach einem der Ansprüche 1 bis 7, **gekennzeichnet dadurch, dass** die Schiene in einen steifen Behälter eingesetzt ist, der in den Mund eingeführt werden kann, wobei der Behälter ein Greiforgan enthalten kann, um einen Arm zu bilden, der seine Einführung in den Mund erleichtert.

9. Vorrichtung nach einem der Ansprüche 1 bis 8, **gekennzeichnet dadurch, dass** sie eine Bissebene oder Verschlussebene umfasst, gegenüber dem Zerkauungsteil der Antagonisten gelegen, um ihr Halten im Mund durch Schließen der Kiefer zu gestatten, wobei die Bissebene oder Verschlussebene von der Schiene getragen wird oder von einem Greiforgan, das von der Schiene getragen wird, oder von einem steifen Behälter, in den die Schiene eingesetzt ist.

10. Vorrichtung nach einem der Ansprüche 1 bis 9, **gekennzeichnet dadurch, dass** die Schiene mindestens eine Öffnung (5a) zur Fluidinjektion/-extraktion in letztere umfasst.

11. Vorrichtung nach Anspruch 9, **gekennzeichnet dadurch, dass** die Mittel zur Fluidinjektion/-extraktion einen ersten Fluidkreislauf umfassen, der mit einem Tank für neues Fluid in der Schiene (1 ; 1' ; 100 ; 100') verbindet, einen zweiten Fluidkreislauf, der das Innere der Schiene (1 ; 1' ; 100 ; 100') mit einem Tank für gebrauchtes Fluid verbindet, Pumpenmittel, um neues Fluid (Fn) in dem ersten Neufluidkreislauf zur Schiene (1 ; 1' ; 100 ; 100') zirkulieren zu lassen und um gebrauchtes Fluid in dem zweiten Fluidkreislauf von der Schiene (1 ; 1' ; 100 ; 100') zum Tank für gebrauchtes Fluid zirkulieren zu lassen, und Ventilmittel, um die beiden Fluidkreisläufe voneinander zu isolieren, so dass der Kreislauf des neuen Fluides (Fn) von dem des gebrauchten Fluides (Fu) isoliert wird, die Mittel zur Fluidinjektion/-extraktion spritzen in die Schiene (1 ; 1' ; 100 ; 100'), in einer Injektionsphase, eine Dosis mindestens eines Fluid aus den folgenden: Luft, ein Edelgas und eine Flüssigkeit, insbesondere eine Reinigungs-und/oder Desinfektionsflüssigkeit, und entfernen, in einer Extraktionsphase, besagte Fluiddosis aus der Schiene (1 ; 1' ; 100 ; 100').

12. Vorrichtung nach Anspruch 11, **gekennzeichnet dadurch, dass**:
- der erste Fluidkreislauf folgendes umfasst, in der Reihenfolge vom Tank für neues Fluid bis zur Schiene (1 ; 1' ; 100 ; 100'): ein erstes Rückschlagventil (22a), eine Verbindung zur Kammer eines ersten Kolbens (18a) und ein zweites Rückschlagventil (21a);
- der zweite Fluidkreislauf umfasst, in der Reihenfolge von der Schiene (1 ; 1' ; 100 ; 100') bis zum Tank für gebrauchtes Fluid, ein drittes Rückschlagventil (21b), eine Verbindung zur Kammer eines zweiten Kolbens (18b) und ein viertes Rückschlagventil (22b);
- der erste und der zweite Kolben (18a und 18b) haben synchrone Ansaug- und Rückstrombewegungen;
- die Kammern des ersten und des zweiten Kolbens (18a und 18b) können dieselbe Fluiddosis enthalten;
- das zweite (21a) und das vierte (22b) Rückschlagventil werden durch eine Ansaugbewegung (f) des ersten (18a) bzw. zweiten (18b) Kolbens verschlossen und durch eine Rückstrombewegung (F) des ersten (18a) bzw. zweiten (18b) Kolbens geöffnet;
- das erste (22a) und das dritte (21b) Rückschlagventil werden durch eine Rückstrombewegung (F) des ersten (18a) bzw. zweiten (18b) Kolbens verschlossen und durch eine Ansaugbewegung (f) des ersten (18a) bzw. zweiten (18b) Kolbens geöffnet;
wodurch bei einer Ansaugbewegung (f) des ersten (18a) und zweiten (18b) Kolbens, neues Fluid (Fn) aus dem Tank für neues Fluid in die Kammer des ersten Kolbens (18a) angesaugt wird, das gebrauchte Fluid (Fu) in der Schiene (1 ; 1' ; 100 ; 100') wird in die Kammer des zweiten Kolbens (18b) geführt, das gebrauchte Fluid (Fu) der Schiene (1 ; 1' ; 100 ; 100') wird durch Verschluss des zweiten Rückschlagventils (21a) daran gehindert, in den ersten Fluidkreislauf einzudringen, und das gebrauchte Fluid (Fu) wird durch Verschluss des vierten Rückschlagventils (22b) daran gehindert, zum Tank für gebrauchtes Fluid zu zirkulieren, und bei einer Rückstrombewegung des ersten (18a) und des zweiten (18b) Kolbens wird neues Fluid aus der Kammer des ersten Kolbens (18a) zur Schiene (1 ; 1' ; 100 ; 100') ausgestoßen und gebrauchtes Fluid (Fu) aus der Kammer des zweiten Kolbens (18b) zum Tank für gebrauchtes Fluid hin ausgestoßen, das neue Fluid (Fn) wird durch Verschluss des dritten Rückschlagventils (21b) daran gehindert, in dem zweiten Fluidkreislauf zu zirkulieren, und das neue Fluid (Fn) wird durch Verschluss des ersten Rückschlagventils (22a) daran gehindert, zum Tank für neues Fluid zurückzukehren, dieses System vermeidet in den Fluidinjektions-/-extraktions-Zyklen jede Mischung des neuen Fluides (Fn) und des gebrauchten Fluides (Fu).

13. Vorrichtung nach Anspruch 12, **gekennzeichnet dadurch, dass** Steuerungsmittel für die Kolben aus einem Elektromotor (25) bestehen, dessen Rotationsbewegung durch eine mechanische Vorrichtung (27) in eine Translationsbewegung der genannten Kolben (18a und 18b) umgewandelt wird, ein Rheostat zur Steuerung der Frequenz der Zyklen von Druckaufbau/Unterdruckaufbau der Schiene und/oder eine Schaltuhr, die die Betriebszeit des Motors festlegt, können mit dem Motor verbunden werden.

14. Vorrichtung nach einem der Ansprüche 11 bis 13, **gekennzeichnet dadurch, dass** der erste Fluidkreislauf außerdem, zwischen dem zweiten Rückschlagventil (21a) und der Schiene (1 ; 1' ; 100 ; 100'), einen ersten Anschluss umfasst, und dass der zweite Fluidkreislauf außerdem zwischen der Schiene (1 ; 1' ; 100 ; 100') und dem dritten Rückschlagventil (21b) einen zweiten Anschluss umfasst, der erste und der zweite Anschluss ermöglicht es, den ersten und zweiten Fluidkreislauf mit/von der Schiene (1 ; 1' ; 100 ; 100') zu verbinden/trennen, der erste und der zweite Anschluss können außerdem mit entsprechenden Anschlüssen einer Tasche zusammenwirken, wenn die Schiene (1 ; 1' ; 100 ; 100') vom ersten und zweiten Fluidkreislauf getrennt ist, zum Einsetzen der Tasche zwischen dem ersten und dem zweiten Fluidkreislauf, um durch Leerung den ersten und zweiten Fluidkreislauf zu reinigen.

15. Vorrichtung nach einem der Ansprüche 12 bis 14, **gekennzeichnet dadurch, dass** die beiden Fluidkreisläufe nahe beieinander in die Schiene (1) münden, vorteilhafterweise in dem vorderen Mittelteil der Schiene (1).

16. Vorrichtung nach Anspruch 9, **gekennzeichnet dadurch, dass** die Mittel zur Fluidinjektion/-extraktion aus mindestens einer Öffnung (5a) in der Schiene (1') bestehen, wodurch die Ansaugung der Luft und/oder des Speichels, den sie enthält, durch den Träger selbst möglich wird, für ihre Kontraktion, und, wenn der Träger die Ansaugung beendet, die Rückführung der Luft und/oder des Speichels in die Schiene (1') für deren Lockerung.

## Claims

1. A teeth cleaning device for simultaneously cleaning the teeth of at least one arch, the device comprising a single or double arc-shaped mouth piece (1; 1'; 100; 100'), adapted to enclose the teeth of an arch or of both arches at the same time, respectively, and to adapt, by its free edge or edges, on the corresponding gum or gums, said mouth piece (1; 1'; 100; 100') being made of a flexible material accepting a deformation reversible and compatible with a medical use, and **characterized by** the fact that the device comprises fluid injection/extraction means for injecting fluid in the mouth piece and extracting said fluid from the inside of the mouth piece, said fluid injection/extraction means subjecting the mouth piece, once the latter is fitted on the teeth for their cleaning, to repeated fluid injection/extraction cycles causing pressurization/depressurization cycles of the mouth piece for cleaning the teeth by a combined action, in the mouth piece, of a fluid circulation on the teeth and between the teeth and a mechanical action of the internal surface (7) of the mouth piece on the teeth, resulting from the relaxation and the constriction of the mouth piece during the injection and extraction cycles, respectively.

2. The device according to claim 1, **characterized by** the fact that the mouth piece (1; 100; 100') has, on at least one part of its internal surface (7), a non-smooth surface state or a non-smooth coating or interface, allowing it to promote the deconstruction of the dental plaque.

3. The device according to claim 2, **characterized by** the fact that the mouth piece (1; 100; 100') has an internal surface (8), partially or entirely covered with reliefs, especially bristles (8) in the manner of a toothbrush, or has a slightly abrasive, of the foam or sponge-type, porous, flexible interface having mechanical properties compatible with the teeth cleaning, the interface being interposed between the mouth piece and the teeth.

4. The device according to one of claims 1 to 3, **characterized by** the fact that the flexible material of the mouth piece (1; 1'; 100; 100') is selected from flexible materials impermeable to gases and liquids, such as latex or silicone compatible with a medical use.

5. The device according to one of claims 1 to 4, **characterized by** the fact that the free edge or edges of the mouth piece (1; 1'; 100; 100'), which are simple or double, respectively, are thickened in the shape of a bulge (6).

6. The device according to one of claims 1 to 5, comprising a double mouth piece, **characterized by** the fact that said double mouth piece (100; 100') is constituted by two simple mouth pieces attached by their bottom with or without communication opening(s) (17) therebetween.

7. The device according to one of claims 1 to 6, **characterized by** the fact that the mouth piece carries a gripping member for constituting a handle facilitating its insertion in the mouth.

8. The device according to one of claims 1 to 7, **characterized by** the fact that the mouth piece is inserted in a rigid receptacle adapted to be inserted in the mouth, wherein said receptacle can comprise a gripping member for constituting a handle facilitating its insertion in the mouth.

9. The device according to one of claims 1 to 8, **characterized by** the fact that it comprises a bite or occlusion plane located opposite the triturating portion of the antagonist teeth for maintaining it in the mouth by closing the jaws, said bite or occlusion plane being carried by the mouth piece or by a gripping member carried by the mouth piece or by a rigid receptacle in which the mouth piece is inserted.

10. The mouth piece for a device according to one of claims 1 to 9, **characterized by** the fact that the mouth piece comprises at least one port (5a) for injecting/extracting fluid therein/therefrom.

11. The device according to claim 9, **characterized by** the fact that the fluid injection/extraction means comprise a first fluid circuit connecting a new fluid reservoir to the inside of the mouth piece (1; 1'; 100; 100'), a second fluid circuit connecting the inside of the mouth piece (1; 1'; 100; 100') to a used fluid reservoir, pump means for circulating new fluid (Fn) in the first new fluid circuit to the mouth piece (1; 1';100; 100') and for circulating used fluid in the second fluid circuit from the mouth piece (1; 1'; 100; 100') to the used fluid reservoir, and valve means for isolating both fluid circuits from each other such that the new fluid (Fn) circulation is isolated from that of the used fluid (Fu), wherein the fluid injection/extraction means inject in the mouth piece (1; 1'; 100; 100'), in an injection phase, a dose of at least one fluid selected from air, an inert gas and a liquid, in particular a cleaning and/or disinfecting liquid, and extract, in an extraction phase, said fluid dose from said mouth piece (1; 1'; 100; 100').

12. The device according to claim 11, **characterized by** the fact that:
- the first fluid circuit comprises, in order from the new fluid reservoir to the mouth piece (1; 1'; 100; 100'), a first one-way valve (22a), a branch to the chamber of a first plunger (18a) and a second one-way valve (21a);
- the second fluid circuit comprises, in order from the mouth piece (1; 1'; 100; 100') to the used fluid reservoir, a third one-way valve (21b), a branch to the chamber of a second plunger (18b) and a fourth one-way valve (22b);
- said first and second plungers (18a and 18b) have synchronous suction and discharge movements;
- the chambers of the first and second plungers (18a and 18b) are adapted to contain a same fluid dose;
- the second (21a) and fourth (22b) one-way valves are closed by a suction movement (f) of the first (18a) and second (18b) plungers, respectively, and opened by a discharge movement (F) of the first (18a) and second (18b) plungers, respectively;
- the first (22a) and third (21b) one-way valves are closed by a discharge movement (F) of the first (18a) and second (18b) plungers, respectively, and opened by a suction movement (f) of the first (18a) and second (18b) plungers, respectively;
whereby, during a suction movement (f) of the first (18a) and second (18b) plungers, new fluid (Fn) is suctioned from the new fluid reservoir into the chamber of the first plunger (18a), the used fluid (Fu) in the mouth piece (1; 1'; 100; 100') being meanwhile circulated in the chamber of the second plunger (18b), the used fluid (Fu) of the mouth piece (1; 1'; 100; 100') being prevented from penetrating the first fluid circuit by closing the second one-way valve (21a) and the used fluid (Fu) being prevented from circulating toward the used fluid reservoir by closing the fourth one-way valve (22b) and, during a discharge movement of the first (18a) and second (18b) plungers, new fluid is ejected from the chamber of the first plunger (18a) to the mouth piece (1; 1'; 100; 100') and used fluid (Fu) is ejected from the chamber of the second plunger (18b) toward the used fluid reservoir, the new fluid (Fn) being prevented from circulating in the second fluid circuit by closing the third one-way valve (21b) and the new fluid (Fn) being prevented from returning to the new fluid reservoir by closing the first one-way valve (22a), this arrangement allowing, in the fluid injection/extraction cycles, to avoid any mix of the new fluid (Fn) and the used fluid (Fu).

13. The device according to claim 12, **characterized by** the fact that means for controlling the plungers are constituted by an electrical motor (25), the rotational movement of which is converted into a translation movement of said plungers (18a and 18b) by a mechanical device (27), wherein a rheostat for controlling the frequency of the pressurization and depressurization cycles of the mouth piece and/or a timer setting the operating time of the motor can be associated to the motor.

14. The device according to one of claims 11 to 13, **characterized by** the fact that the first fluid circuit further comprises, between the second one-way valve (21a) and the mouth piece (1; 1'; 100; 100'), a first fitting, that the second fluid circuit further comprises, between the mouth piece (1; 1'; 100; 100') and the third one-way valve (21b), a second fitting, said first and second fittings allowing to connect/disconnect the first and second fluid circuits to/from the mouth piece (1; 1'; 100; 100'), the first and second fittings being further adapted to cooperate with corresponding fittings of a pouch for inserting, the mouth piece (1; 1'; 100; 100') being disconnected from the first and second fluid circuits, said pouch between the first and second fluid circuits for cleaning said first and second fluid circuits by purging.

15. The device according to one of claims 12 to 14, **characterized by** the fact that both fluid circuits lead to the mouth piece (1) near each other, advantageously in the front central portion of said mouth piece (1).

16. The device according to claim 9, **characterized by** the fact that the fluid injection/extraction means consist of at least one port (5a) formed in said mouth piece (1') for suctioning, by the user himself or herself, air and/or saliva it contains in order to contract it, and then, when the user stops suctioning, returning the air and/or saliva into said mouth piece (1') for relaxing it.
